# EUROPEAN PATENT SPECIFICATION

(11) **EP 0 451 028 B1**
(45) Date of publication and mention of the grant of the patent: **14.02.1996**
(21) Application number: 91400848.7
(22) Date of filing: 28.03.1991
(51) Int. Cl.: B60K 17/34, B60K 17/08, F16H 57/02

(54) **Power train for four wheel drive vehicle**
Kraftübertragung für ein vierradgetriebenes Fahrzeug
Transmission de force pour un véhicule à quatre roues motrices

(30) Priority: 31.03.1990 JP 85275/90; 31.03.1990 JP 85276/90; 31.03.1990 JP 85274/90; 31.03.1990 JP 85277/90; 31.03.1990 JP 85278/90
(43) Date of publication of application: 09.10.1991
(73) Proprietor: SUZUKI MOTOR CORPORATION, Hamana-gun, Shizuoka-ken (JP)
(72) Inventor: Kawabe, Masato, Hamamatsu-shi, Shizuoka-ken (JP); Yamashita, Masayoshi, Hamamatsu-shi, Shizuoka-ken (JP); Kato, Kiyokazu, Hamamatsu-shi, Shizuoka-ken (JP); Yagi, Shouji, Hamamatsu-shi, Shizuoka-ken (JP)
(74) Representative: Phélip, Bruno

(56) References cited:
- EP-A- 365 276
- EP-A- 0 202 951
- AT-B- 390 036
- DE-A- 3 044 712
- DE-A- 3 401 592
- DE-A- 3 428 574
- DE-A- 3 500 099
- DE-A- 3 522 058
- JP-A-61 249 835
- JP-B-63 005 294

## Description

This invention relates to a power transfer unit for four-wheel drive vehicles and, in particular, to a power transfer train system for four-wheel drive vehicles with easily changeable gear ratios.

This invention relates more precisely to the power train of four-wheel driven vehicles and, in particular, to the power train of four-wheel driven vehicles, wherein it is possible to distribute evenly the weight of the power train consisting of transmission, differential gear and power distribution devices.

According to the known prior art, there are four-wheel drive vehicles equipped with a power transfer system by which the driving power taken off a transmission is transmitted to drive wheels on either front or rear end of the vehicle, while the power taken off the transmission is distributed by a power distribution unit and transmitted to drive wheels on the other end of the vehicle. Examples of such four-wheel drive power train system are disclosed in patent gazettes TOKU-KO-SHO 62-43884, TOKY-KO-SO 63-5294, TOKU-KO-SHO 63-35444 and JITSU-KAI-SHO 60-84725.

The power transfer system disclosed by TOKU-KO-SHO 62-43884 has a differential which transmits power to either front or rear wheels, a power distribution unit which distributes the power through the diferential to wheels on the other end of the vehicles and a clutch system between the differential and the distribution unit to switch between two-and four-wheel drives.

The power transfer system disclosed by TOKU-KO-SHO 63-5294 has a front-rear wheel differential, which allows the power taken off the transmission to operate between front and rear wheels, a single-end differential coupled to one side of the front-rear wheel differential to drive either front or rear wheels and another single-end differential coupled to the other side of the front-rear wheel differential to drive wheels on the other end.

The power transfer system disclosed by TOKU-KO-SHO 63-35444 has a transmission containing a primary set of reduction gears, a secondary set of reduction gears and a common output shaft for both gear sets. The unit also has an idling shaft to carry the above-mentionned secondary set of gears installed in parallel with the output shaft. The end of these output and idling shafts on the engine side are supported outside the clutch case, whereas a clutch release arm is installed inside the clutch case wall in a spot opposite to the spot where the idling shaft is supported.

On the other hand, the power train disclosed in JITSU-KAI-SHO 60-84725 has a differential connected to a transmission, through a set of final reduction gears, and a power distribution unit coupled to the differential, the differential and the power distribution units being connected with each other through a set of gears other than the above-mentioned set of final reduction gears.

A four-wheel driven vehicle is normally equipped with a power train system consisting of a transmission box, differential gear boxes and a power distribution system (hereinafter referred to as a "transfer"), a driving shaft, 2WD-4WD (two-wheel drive/four-wheel drive) converter, wheel drive axles, etc. The transmission box, differential boxes and transfer are arranged and installed on the vehicle as the power train.

A problem commonly found among all such conventionnal power trains is that they are constructed with the differential and transfer installed, on one side, on a radial axis of the transmission input shaft to intersect the axis of the input shaft at right angles while the input shaft is located in line with the crankshaft of the internal combustion engine. The configuration results in the uneven distribution of the weight around the crankshaft and in the generation of harmful vibrations and noise.

In some prior art systems:
- For changing gear ratios, it is necessary to replace the drinven gear, which interlocks with the final reduction drive gear and the final reduction driven gear, by a gear with the desired number of teeth and, in addition, in order to match the revolution speed of the wheels on one end of the vehicle with that of the wheels on the other end, the input and output gears of the power distribution unit,connected with the wheels on the other end, as well as the set of final reduction gears,connected to the wheels on either end, need to be replaced by gears with the suitable number of teeth for matching. In order to change the gear ratios of the power train, it is necessary to dismantle the transmission case, the distribution unit and the final reduction case containing the final reduction gears of the final drive system and replace many of the gears contained therein by gears with the correct number of teeth. It is a labor and time consuming work to dismantle all such units and replace a large number of gears. The need for a large number of replacement gears with different numbers of teeth is also prone to increase the costs involved.
- The system may include such components as a chain, sprockets, an intermediate shaft, etc., thereby rendering the construction not only difficult, but also complex, since the intermediate shaft has then to be installed so as to penetrate into the power train.
- Furthermore, the need for the transfer, placed beside the transmission case, means a greater number of components required to complete the system.

The object of this invention, therefore, is to provide a four-wheel drive power train wherein the gear ratios can be easily changed, without the trouble of dismantling cases and replacing a large number of gears, and to lower the cost involved.

The object of this invention is reached by installing a transmission with an input shaft placed in line with the crankshaft of the internal combustion engine and a differential on one side of the input shaft on a radial axis intersecting the axis of the input shaft at right angles and, also, by installing, on the opposing side of the input shaft, a power distributor which is driven by the revolution of the input shaft, so as to attain the even distribution of the weight around the crankshaft and to eliminate unnecessary noise and vibration.

Furthermore, the invention aims to provide four-wheel drive vehicles with a power train of simple configuration to enable easy transmission of driving power to either front or rear wheels and, by integrating all necessary mechanisms in a single case, to reduce the required number of components.

Measures taken to solve these problems by this invention are as follows : The power train of this invention is constructed in such a way that the power, taken off from the transmission,drives wheels on either the front or rear end of a vehicle and, at the same time, the power, taken off from the same transmission, is also distributed by a power distribution unit to drive the wheels on the other end of the vehicle. This power train is characterized by its configuration whereby the whole system is housed in a case consisting of at least one main case and a detachable side case ;it has an intermediate shaft connected to the main shaft of the above transmission and to either front or rear wheels and, also, an input shaft of the above power distribution unit which is connected to wheels on the other end, and each of these shafts is rotatably supported by the main and side cases ; each of the main shaft, intermediate shaft and input shaft is mounted with a detachable primary and secondary sets of gears on the end toward the side case.

Due to the above-mentioned structure, each of the main shaft, intermediate shaft (connected to wheels on either front or rear wheels), and input shaft of the power distribution unit connected to wheels on the end other than the above-mentioned end are mounted with detachable primary and secondary sets of gears on the end towards the side case. These primary and secondary gears can be exposed by detaching the side case so that the gears can be exchanged with other sets of gears with different number of teeth.

In the structure according to this invention, as above-mentioned, there are a transmission main shaft, an intermediate shaft, connected to either front or rear wheels, and a distriution unit input shaft connected to wheels on the other end, all of which are rotatably supported by the main case on one end and by the side case on the other end, and primary and secondary intermediate gear sets are detachably mounted on the side case end of these shafts and are interconnected with each other. The primary and secondary intermediate gear sets can be exposed by simply taking off the side case section, which is attached to the main case, and this allows to replace the set of gears with a new set having different numbers ot teeth.

As the gear ratio of the power train according to the invention can therefore be changed by only taking off the side case section, any extensive service, such as dismantling the power distribution unit, the final reduction case of the final reduction unit containing the final reduction gear set connected to either front or rear wheels, as was the case with conventional power tarins, is no longer necessary. Since the gear ratio according to the invention can be changed by only replacing the primary and secondary intermediate gear sets, there is no need to change so many gears as in the conventional units. Gear changes can be accomplished due to the invention without the extensive service needed for changing a great number of gears and without having to keep any excessive stock of gears. Gear changes will thus be greatly facilitated and possible at less cost.

In order to attain the above-mentioned objectives, this invention has for an object a transmission having an input shaft placed in line with the crankshaft of the internal combustion engine, a differential on one side of the input shaft on its radial axis and intersecting the axis of the input shaft, and a drive distributor on the other side of the input shaft to be driven by the rotation of the input shaft.

More particularly the invention has for an object a power train system for a four-wheel drive vehicle, comprising within a case a transmission box for taking off power from an internal combustion engine of the vehicle through a crankshaft, a power distribution unit for distributing power taken off from said transmission box through a main shaft to the wheels on either front or rear end of the vehicle, and a differential gear box for transfering the power to the wheels on the other end of the vehicle,
the case being divided at least into one main case and one detachable side case mounted on said main case,
the main shaft, an intermediate shaft drivingly connected to the main shaft of the transmission box and the wheels on the front or rear end of the vehicle, and an input shaft of the power distribution box, the input shaft being drivingly connectable to the wheels on the other end of the vehicle, being installed so that all three shafts are supported by said main case and said side case;
on the end of the main shaft, intermediate shaft, and input shaft toward the side case, detachable primary and secondary sets of intermediate gears interconnecting these shafts with each other,
an input shaft of the transmission box being disposed in line with the crankshaft of the internal combustion engine, the differential gear box being disposed on one side of the input shaft and the power distribution box being disposed on the other side of said input shaft.

It has also for an object a power train system for a four-wheel driven vehicle provided with a transmission box with an input disposed in line with the crankshaft of the internal combustion engine, a differential gear box disposed on a side of, and the axis at right angle to, the axis of said input axle, which is driven by the revolution of said input axle, and a power distribution box, disposed on the other side of said input axle, which is also driven by said input axle.

Due to the configuration according this invention, wherein the differential is placed on one side of the input shaft on a radial axis which intersects the axis of the input shaft of the transmission at right angles, and the drive distributor on the opposite side, weight is evenly distributed around the crankshaft to prevent the generation of detrimental vibrations and noise.

Regardless of whether it is installed in the front or rear end of a vehicle, the system is able to drive the wheels at one end through the differential and, simultaneously, the wheels at the other end through the drive distributor, so that the distribution of driving motion to all four wheels can be attained by the simple configuration of mechanisms utilizing a number of common parts and components.

As herein-above explained, this invention consists in a transmission with an input shaft located in line with the crankshaft of an internal combustion engine, a differential operated by the rotation of a differential disposed on a radial side, with its axis intersecting the a is of the input shaft at right angles, and a drive distributor installed on the opposite radial side of the input shaft. This configuration provides not only for even distribution of weight around the crankshaft, so as to eliminate undesirable vibrations and noise, but also for simple means for transmitting the driving motion, regardless of whether the engine is mounted at the front or rear end of a vehicle. The all-inclusive single case construction enables minimizing the number of required parts and components.

The details of this invention will now be explained as follows with reference to the appended drawings in which :
Fig. 1 is a schematic cross-section showing a first embodiment according to invention,
Fig. 2 is a horizontal cross-sectional view of the power train,
Fig. 3 is a blow-up side view of the power train,

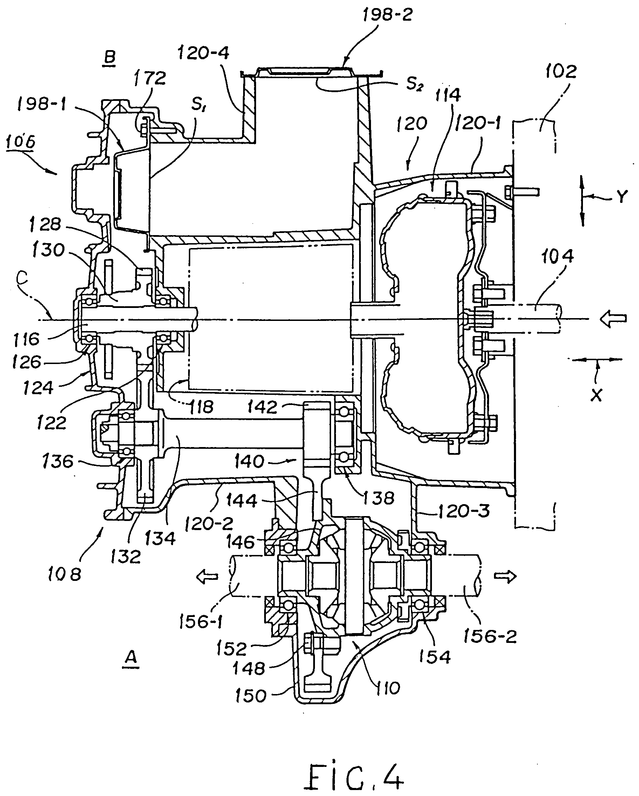

Fig. 4 is a horizontal cross-sectional view of the transfer and the power train with the 2WD-4WD converter dismantled.

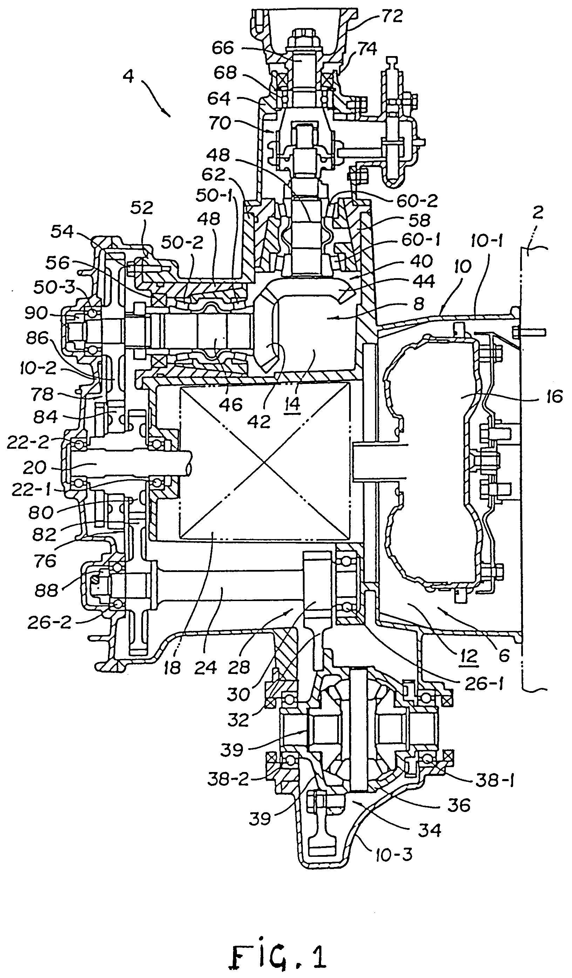

In Fig. 1 are shown an internal combustion engine 2, a power tarnsfer unit 4, a transmission 6 and a power distribution unit 8. The power transfer unit 4 drives the wheels on one end of the vhicle with the power taken off from the transmission 6, while, at the same time, it distributes the power taken off from the transmission 6, through the power distribution unit 8, to drive the wheels on the other end.

The main case 10 of the power train 4 consists of (being dividable) into a main case 10-1 and a side case 10-2. The unit of this example also has a dividable bottom case 10-3. This case 10 is provided with a space 12 allocated for a transmission 4 and a space 14 allocated for a power distribution unit.

The space 12 for the transmission contains components, such as a torque converter 16 and an auxiliary transmission 18 which are comprised by the transmission. The power modified by said torque converter 16 and auxiliary transmission 18, is outputed on a main shaft 20. The end of the main shaft 20, away from the internal combustion engine 2, penetrates through the main case 10-1 and protrudes out of the side case 10-2 and is rotatably supported by the main case 10-1 and the side case 10-2 carrying the main primary and secondary bearings, respectively 22-1 and 22-2.

The main case 10-1 and side case 10-2 also support the intermediate shaft 24 leading to either front or rear wheels, with the intermediate primary and secondary bearings, respectively 26-1 and 26-2. The intermediate shaft 24 is installed in parallel with the main shaft 20 and mounted with a single-end final drive gear 30, which comprises a single-end final reduction drive gear set transmitting the power to either front or rear wheels. This single-end final reduction drive gear interlocks with a single-end final reduction driven gear which is secured onto the differential housing 36. The differential housing 36 is rotatably supported by the main case 10-1 and the bottom case 10-3 carrying the differential primary and secondary bearings, respectively 38-1 and 38-2. There is also a set of differential gears 39 installed inside the differential housing 36.

The above-mentioned space 14 for the distribution unit contains a power distribution unit 8 connected to either front or rear wheels. The power distribution unit 8 consists of a distribution gear set of an input gear 42 and output gear 44, each of which is mounted on the end of an input shaft 46 and an output shaft 48 respectively and interlocks with each other. The input shaft 46 is installed in parallel with the main shaft 20 and supported at one end by the input retainer 48, with the primary and secondary input bearings, and by the side case 10-2, with the tertiary input bearing 50-3.

The input retainer 48 is mounted on the input side of the mounting flange 52 of the main case 10-1 with mounting bolts 54. In this way, the input shaft 46 is rotatably supported by the input retainer with the primary and secondary input bearings, respectively 50-1 and 50-2, and the retainer is held in turn by the main case 10-1 with the primary and secondary input retainers, through the input retainer 48. There is an input side oil seal 56 surrounding the input retainer 48.

The output shaft 48 is supported by the output side retainer 58, with the primary and secondary output bearings, (respectively 60-1 and 60-2). The output side retainer 58 is installed inside the output gate flange 62 of the main case. This output shaft 48 is mounted with the output gear 44 on one end which interlocks with the input gear 42 at the end of the input shfat 46, whereas the other end of the output shaft is protruding out of the retainer 58.

The distribution unit case 64 is jointed to cover the output retainer 58. This distributor case supports a transfer shaft 66 with a transfer bearing 68. The other end of the transfer shaft 66 is coupled to the end of the ouptput shaft 46 with a shifting device 70 to connect or disconnect the joint. Moreover, the other end of this transfer shaft 66 has a coupler 72 for connection to a (not shown) propeller shaft leading to either front or rear wheels. The distribution unit case 64 is fixed with an output side oil seal 74.

As can be seen, the power train 4 carries the main shaft 20 of the transmission 6, the intermediate shaft 24, which is connected to either front or rear wheels, and the input shaft 46 of the power distribution unit 8, which is connected to the wheels on the other end, respectively, in the main case 10-1 and side case 10-2 sections. A set of primary and secondary intermediate gears 76 and 78 are mounted on the main shaft 20, intermediate shaft 24 and input shaft 46, at the side case (10-2) end of these three shafts for interconnection with each other and are detachable.

The primary intermediate gear set 76 consists of the primary intermediate drive gear 80 and driven gear 82 which transmit the power from the main shaft 20 to either front or rear wheels. The primary intermediate drive gear 80 is mounted on the splined part of the main shaft 20, between the main case 10-1 and the side case 10-2, so as to be detachable. The primary intermediate driven gear 82, which is interlocked with this primary intermediate drive gear 80, is mounted on the splined part of the intermediate shaft 24, in the side case 10-2,so as to be detachable. The primary intermediate gear set 76 is therefore installed on the end of main shaft 20 and the intermediate shaft 24 directly facing inside the side case 10-2 and is detachable.

The secondary intermediate gear set 78 consists of the secondary intermediate drive gear 84 and drive gear 86 which transmit the power to either front or rear wheels. The secondary intermediate drive gear 84 is attached to the primary intermediate drive gear 80 which is detachably mounted on the main shaft 20. The secondary intermediate driven gear 86, which is interlocked with the secondary intermediate drive gear 84, is detachably mounted on the splined part of the input shaft 46 of the power distribution unit 8 at the end located in the side case 10-2. Therefore, it is detachably mounted on the main shaft 20 and input shaft 46 close to the inner wall of the side case 10-2.

References 88 et 90 designate locking nuts screwed onto the other end of intermediate shaft 24 and input shaft 46.

The operation of the system of Fig. 1 is as follows:
The power train 4 receives power from the internal engine 2 through the torque converter 16, and auxiliary transmission 18 of the transmission 6 converts the speed automatically according to the driving condition and transmits it to drive either front or rear wheels (not shown) through the primary intermediate gear set, consisting of the primary intermediate drive gear 80 and driven gear 82, the single-ended final reduction gear set 28, consisting of the single-ended final reduction drive gear 30 and driven gear 32, and the single-ended differential 34. Furthermore, this power train 4 transmits the power received to the main shaft 20 from the transmission 6, distributes it by the input gear 42 and output gear 44 of the distribution unit 8 and transmits it, through the secondary intermediate gear set 78 consisting of the secondary intermediate drive gear 84 and driven gear 86, to the wheels on the rear or front end other than the above-mentioned end.

To change the gear ratios of this power train 4, one should firstly take off the side case 10-2 attached to the main case 10-1 and expose the primary and secondary intermediaire gear set 76 and 78, then dismantle locking nuts 88 and 90, secondary main bearing 22-2, secondary intermediate bearing 26-2 and tertiary input bearing 50-3, in order to take off the detachable primary and secondary intermediate gear sets 76 and 78 and afterwards mount new primary and secondary intermediate gear sets 76 and 78 with different numbers of teeth.

The gear ratio of the power train 4 can be changed in this way.

As can be seen , the mounting of the primary and secondary intermediate gear sets 76 and 78, which interconnect the main shaft 20, intermediate shaft 24 and input shaft 46 detachably to the side case end of these shafts, which are supported by the main case 10-1 and the side case 10-2, makes it easy to expose all these gears, the primary and secondary intermediate gear sets 76 and 78, by simply taking off the side case cover 10-2 attached to the main case 10-2 ; therefore they can be easily exchanged with a new set of gears with different numbers of teeth.

As the gear ratio can be changed by simpley taking off the side case cover 10-2, it is not necessary, as in the case of many conventional units, to dismantle the distribution unit case or disassemble the final reduction gear case of the final reduction unit housing, i.e. the final reduction gear set that relates to either front or rear wheels. Moreover, the gear ratio can be changed by simply replacing the primary and secondary intermediate gear sets 76 and 78, instead of a large number of gears required to be replaced in conventional power trains. The invention eliminates the need for the superfluous work of exchanging a great number of gears and for keeping a large stock of gears with different numbers of teeth. Thus, gear ratio change will now be a simple and inexpensive service with the power train of this invention.

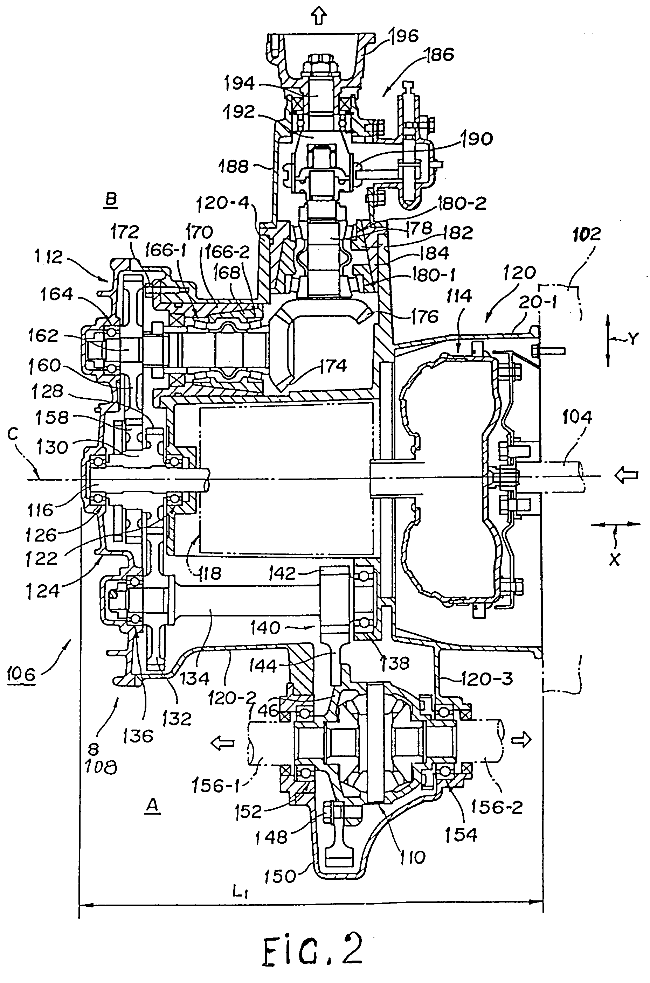

In Fig. 2, is shown an internal combustion engine 102 placed longitudinally in a vehicle (not shown) ; reference 104 represents the crankshaft of the engine 102 and reference 106 represents a power train which conveys the driving power generated by the engine 102 to the wheels (not shown).

The power train 106 consists of a transmission 108, a differential 110 and a drive distributor 112 (hereinafter referred to simply as the "transfer").

The transmission 108, as mentioned above, is an automatic transmission consisting of a torque converter 114, an input shaft 116 and an auxiliary transmission 118 mounted on the input shaft 116.

The torque converter 114, as mentioned above, is located between the crankshaft 104 and the input shaft 116 in order to provide a clutch funtion for connecting and disconnecting the revolving motion of the crankshaft 104 and also to magnify and convey the driving power of the engine 102. The torque converter 114 is housed in a converter cover 120-1 of the main case 120 which is mounted attached to the engine 102.

While one end of the foregoing input shaft 116 is coupled to the torque converter 114 at one end through an auxiliary transmission 118, the opposing side of it is supported by the primary bearing 122, supported by the auxiliary transmission cover 120-2 of the main case 120, and the secondary bearing, supported by the side cover 124 which is attached to an end of the auxiliary transmission cover 120-2.

As shown in Fig. 2, the input shaft 116 is installed on the axis "C" which is placed in line with the crankshaft 104.

In this embodiment, the differential 110 is installed on the side "A" of a radial axis "Y" which intersects the axis "X", at right angles, placed in line with the axis "C" of the input shaft 116, while the transfer 112 is placed on the opposing side "B".

The input shaft 116, placed between the foregoing auxiliary transmission cover 120-2 and the side case 124, is mounted with the gear base 130 of an intermediate drive gear 128.

The intermediate drive gear 128 interlocks with an intermediate driven gear 132. The intermediate driven gear 132 is mounted on one end of an intermediate shaft 134 which is placed approximately in parallel with the input shaft 116. This intermediate shaft 134 is rotatably held by a primary bearing 136, supported by the side case 124 at one end, and by a secondary bearing 138, supported by the main case 120 at the opposite end, and is placed on the radial side "Y" of the input shaft 116.

The final reduction drive gear 142 of the final reduction gear mechanism 140 is attached to the opposing end of the foregoing intermediate shaft 134. The final reduction drive gear 142 interlocks with a final reduction driven gear 144 of a larger diameter.

The final reduction driven gear 144 is secured to the differential housing 146 of the differential 110 with a gear mounting bolt 148.

The differential housing 146 is rotatably held at one end by a primary differential housing bearing 152 which is supported by the differential side cover 120-3 on one side and by the side of a bottom cover 150, and is rotatably held at the opposite end by a secondary differential housing bearing 154, which is supported by the other side of the differential cover 120-3 and by the other side of the bottom case 150.

This differential 110 is coupled with LH and RH wheel drive shafts (156-1 and 156-2 respectively).

In addition, the intermediate drive gear 128 and a transfer drive gear 158 are secured in parallel with the gear base 130 which is mounted on the input shaft 116.

A transfer driven gear 160 is interlocked with the transfer drive gear 158. The transfer driven gear 160 is mounted on an input transfer shaft 162.

The input transfer shaft 162 is placed approximately in parallel with the foregoing input shaft 116 on the opposite side of the above mentioned intermediate shaft 134, i.e. on the other radial side "B" of the input shaft 116.

The input side shaft of the transfer 162 is rotatably held on one end by an input side bearing 164, supported by the side cover 124 and by primary and secondary needle bearings, 166-1 and 166-2 respectively, on the opposing end.

The foregoing primary and secodary needle bearings, 166-1 and 166-2 respectively, are supported by the auxiliary transmission case 120-2 and the transfer side cover 120-4 by way of a primary cage 168 and a primary retainer 170.

The foregoing primary retainer 170 is held by a retainer bolt 172 on the auxiliary transmission case 120-2 and the transfer side case 120-4.

On the opposing end of the foregoing transfer input shaft 162, is mounted an input bevel gear 174.

The input bevel gear 174 interlocks with an output bevel gear 176. The output bevel gear 176 is secured to the end of a transfer output shaft 178.

The transfer output shaft 178 is rotatably held by the secondary needle bearings 180-1 and 180-2. The secondary needle bearings 180-1 and 180-2 are supported by the transfer side cover 120-4 by means of a secondary retainer 182 and a secondary retainer 184.

The opposite end of the foregoing transfer output shaft 178 is coupled to a 2WD-4WD selector 186.

The 2WD-4WD selector 186 has a selector sleeve 190 and a selector connecting shaft 192 inside a selector housing 188. The purpose of this selector is to select between 2WD (two-wheel drive) and 4WD (four-wheel drive) by disconnecting or connecting the drive of the internal combustion engine 102, which is transmitted to the transfer output shaft 178, by moving the selector sleeve 188 back and forth along the direction of the transfer output shaft 178.

A companion flange shaft 198 is coupled to the selector connecting shaft 192 inside the selector housing 188 of the 2WD-4WD selector 186. The companion flange shaft 194, in turn, is coupled to a companion flange 196 which is connected to the driving shaft (not shown).

The operation of this embodiment is as follows : The driving motion generated by the internal combustion engine 102 rotates the crankshaft 104 and the motion is then conveyed to the input shaft 116 through the torque converter 114.

The rotating motion of the input shaft 116 is then conveyed, through the intermediate drive gear 128 and the interlocking intermediate driven gear, to the intermediate shaft 134.

The rotating motion, thus conveyed to the final reduction drive gear 142 mounted on the shaft, rotates the final reduction drive gear 144 which, in turn, rotates the differential housing 146 fixed to the gear 144. The differential 110 is then driven by way of the rotation of the differential housing 146 and, thus, the drive generated by the internal combustion engine 102 is finally conveyed to LH and RH wheel drive shafts 156-1 and 156-2 respectively.

Meanwhile, the transfer drive gear 158 is rotated by the motion of the input shaft 116 and, subsequently, rotates the transfer driven gear 160, which interlocks with the transfer drive gear 158, and the transfer input shaft 162.

The rotation of the transfer input shaft 162 is conveyed to the input bevel gear 174 and then on to the ouput bevel gear 176.

Finally, the transfer output shaft 178 is rotated by the motion of the output bevel gear 176.

If 4WD is selected by the 2WD-4WD selector mechanism 186, the drive of the internal combustion engine 102 is conveyed to the driving shafts (not shown) through the companion flanges 194 and 196.

If 2WD is selected by the 2WD-4WD selector mechanism 186, the companion flange 194 is disconnected and the drive will not be conveyed to it.

Due to such a configuration of this power train 102, with the differential 110 and the final reduction gear mechanism 140 located on one "Y" radial side "A" of the input shaft 116 and the transfer 112 2WD-4WD selector mechanism 186 on the opposite side "B", i.e. with the differential 110 and the transfer 112 located along the radial axis "Y" on opposite sides and the input shaft 116 in the center, the weights of the related components are evenly distributed around the input shaft and, consequently, around the crankshaft, so as to eliminate detrimental vibrations and noise.

In addition, it becomes possible to contain the auxiliary transmission 118 and the transfer 112 in the main case 120 so as to reduce the number of required componets and overall costs.

Furthermore, intermediate drive gears 128 for the differential 110 and transfer drive gears 158 for the transfer 112, mounted on the input gears 116, are properly distributed, so that it is possible to minimize the width L₁, as compared with L₂ of the power train 106 shown in Fig. 2.

In addition, while, in the conventional systems, it was necessary to avoid the rear differential for transmitting the driving motion from the rear wheel differential to the transfer, and therefore the total width of the transfer was larger than that of the clutch housing or converter housing, the width of the transfer 112, in a system according to this invention, is never larger than the converter housing, thereby facilitating the mounting on a vehicle.

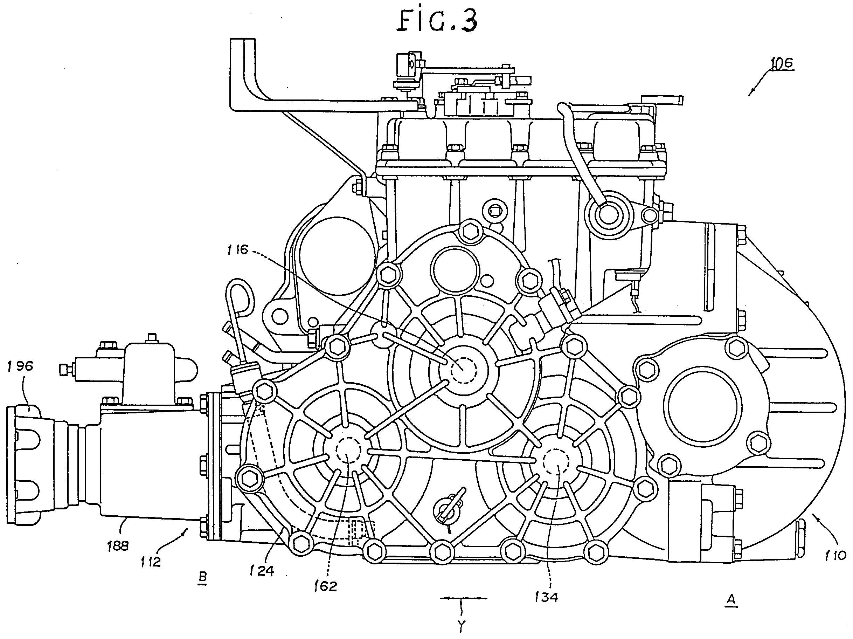

Furthermore, as apparent from the side view of the power train 106 shown in Fig. 3, the auxiliary transmission 118, the differential 110 and the transfer 112 can be installed approximately in line ; therefore the train 106 can be flattened by minimizing its height and its bottom can be made flat to ensure the minimum height above the ground.

On the other hand, when the transfer 112 should be operated only for 2WD (two-wheel drive), the opening N° 1, i.e. S₁,of the main case 120 for the input end of the transfer shaft 162 should be closed with the cover N° 1, i.e. 198-1, after dismantling all the related parts of transfer 112 and the 2WD-4WD converter 186. In this cas, the cover N° 1, i.e. 198-1, should be fixed on the main case 120 with the retainer mounting bolts 172. Furthermore, the opening N° 2, i.e. S₂, or the main case 120 for the output end of the transfer shaft 182 should be closed with the cover N° 2,i.e. 198-2. This cover N° 2 shall be fixed by (not shown) securing means to the main case 120.

It is a practical solution since the main case 120, etc. shown in Fig. 2 can be used without the transfer 112 and 2WD-4WD converter 186 being mounted, thereby making the main case and other pertinent parts available for common use without relying on a more complicated setup.

In this embodiment, it is therefore not necessary to make any modification to the power train 106, regardless of whether the transversely mounted engine 102 is placed at the front or rear end of the vehicle, for easy application.

## Claims

1. A power train system for a four-wheel drive vehicle comprising within a case (10, 120) a transmission box (6) for taking off power from an internal combustion engine (2, 102) of the vehicle through a crankshaft (104), a power distribution unit (8, 112) for distributing power taken off from said transmission box (6) through a main shaft (20, 116) to the wheels on either front or rear end of the vehicle, and a differential gear box (34, 110) for transfering the power to the wheels on the other end of the vehicle,
the case (10, 120) being divided at least into one main case (10-1, 120-2) and one detachable side case (10-2, 120-2) mounted on said main case,
the main shaft (20, 116), an intermediate shaft (24, 134) drivingly connected to the main shaft (20, 116) of the transmission box (6) and the wheels on the front or rear end of the vehicle, and an input shaft (46, 162) of the power distribution box (112), the input shaft (46, 162) being drivingly connectable to the wheels on the other end of the vehicle, being installed so that all three shafts (20, 116; 24, 234; 46, 162) are supported by said main case (10-1, 120-1) and said side case (10-2, 120-2),
on the end of the main shaft (20, 116), intermediate shaft (24, 134), and input shaft (46, 162) toward the side case (10-2, 120-2), detachable primary (76) and secondary (78) sets of intermediate gears interconnecting these shafts with each other,
an input shaft (20, 116) of the transmission box (6) being disposed in line with the crankshaft (104) of the internal combustion engine (2, 102), the differential gear box (34, 110) being disposed on one side (A) of the input shaft (20, 116) and the power distribution box (112) being disposed on the other side (B) of said input shaft (20, 116).

## Patentansprüche

1. Kraftübertragungssystem für ein vierradgetriebenes Fahrzeug mit einem in einem Gehäuse (10, 120) befindlichen Transmissionsgetriebekasten (6) zur Leistungs- oder Kraftaufnahme von einem Verbrennungsmotor (2, 102) des Fahrzeugs über eine Kurbelwelle (104), mit einer Kraftverteilereinheit (8, 112) für die Verteilung der vom Transmissionsgehäuse (6) abgenommenen kraft über eine Hauptwelle (20, 116) zu den Vorderrädern oder zu den Hinterrädern des Fahrzeugs, und mit einem Differentialgetriebekasten (34, 110) für die Übertragung der Kraft an das jeweils andere Ende des Fahrzeugs,
- wobei das Gehäuse (10, 120) in wenigstens ein Hauptgehäuse (10-1, 120-1) und in ein lösbares Seitengehäuse (10-2, 120-2) unterteilt ist, das am Hauptgehäuse befestigt ist,
- wobei ferner die Hauptwelle (20, 116), eine Zwischenwelle (24, 134), die in Antriebsverbindung mit der Hauptwelle (20, 116) des Transmissionsgetriebekastens (6) und mit den Vorderrädern oder Hinterrädern des Fahrzeugs steht, und eine Eingangswelle (46, 162) des Kraftverteilerkastens (112), die mit den Rädern am anderen Ende des Fahrzeugs in Antriebsverbindung bringbar ist, so installiert sind, daß alle drei Wellen (20, 116; 24, 234; 46, 162) vom Hauptgehäuse (10-1, 120-1) und vom Seitengehäuse (10-2, 120-2) getragen werden,
- wobei weiterhin an demjenigen Ende der Hauptwelle (20, 116), der Zwischenwelle (24, 134) und der Eingangswelle (46, 162), das zum Seitengehäuse (10-2, 120-2) weist, lösbare erste und zweite Sätze (76; 78) von Zwischengetrieberädern vorgesehen sind, die diese Wellen miteinander verbinden,
- und wobei eine Eingangswelle (20, 116) des Transmissionsgetriebekastens (6) mit der Kurbelwelle (104) des Verbrennungsmotors (2, 102) fluchtend angeordnet ist, wobei der Differentialgetriebekasten (34, 110) sich an einer Seite (A) der Eingangswelle (20, 116) befindet und die Kraftverteilereinheit (112) an der anderen Seite (B) der Eingangswelle (20, 116).

## Revendications

1. Système de transmission de puissance pour un véhicule à quatre roues motrices comprenant, à l'intérieur d'un carter (10, 120), une boîte de transmission (6) pour recueillir la puissance d'un moteur à combustion interne (2, 102) du véhicule au travers d'un vilebrequin (104), une unité de distribution de puissance (8, 112) pour délivrer, au travers d'un arbre principal (20, 116), la puissance recueillie de ladite boîte de transmission (6) aux roues situées, soit sur l'extrémité avant, soit sur l'extrémité arrière du véhicule, et une boîte à différentiel (34, 110) pour transférer la puissance aux roues situées sur la seconde extrémité du véhicule,
le carter (10, 120) étant subdivisé au moins en un carter principal (10-1, 120-1) et un carter latéral séparable (10-2, 120-2) monté sur ledit carter principal,
l'arbre principal (20, 116), un arbre intermédiaire (24, 134) accouplé par une liaison d'entraînement à l'arbre principal (20, 116) de la boîte de transmission (6) et aux roues situées sur l'extrémité avant ou arrière du véhicule, et un arbre d'entrée (46, 162) de la boîte de distribution de puissance (112), cet arbre d'entrée (46, 162) pouvant être accouplé par une liaison d'entraînement aux roues situées sur la seconde extrémité du véhicule, étant installés de telle sorte que les trois arbres (20, 116; 24, 234; 46, 162) sont tous supportés par ledit carter principal (10-1, 120-1) et ledit carter latéral (10-2, 120-2),
tandis que sur l'extrémité de l'arbre principal (20, 116), de l'arbre intermédiaire (24, 134) et de l'arbre d'entrée (46, 162), vers le carter latéral (10-2, 120-2), des trains primaire (76) et secondaire (78) séparables d'engrenages intermédiaires relient ces arbres entre eux,
un arbre d'entrée (20, 116) de la boîte de transmission (6) étant disposé en alignement avec le vilebrequin (104) du moteur à combustion interne (2, 102), la boîte à différentiel (34, 110) étant disposée sur un côté (A) de l'arbre d'entrée (20, 116) et la boîte de distribution de puissance (112) étant disposée sur l'autre côté (B) dudit arbre d'entrée (20, 116).
